# EUROPÄISCHE PATENTSCHRIFT

(11) **EP 1 159 537 B1**
(45) Veröffentlichungstag und Bekanntmachung des Hinweises auf die Patenterteilung: **18.09.2002**
(21) Anmeldenummer: 00904930.5
(22) Anmeldetag: 19.01.2000
(51) Int. Cl.: F16B 13/12

(54) **SPREIZDÜBEL**
EXPANSION ANCHOR
CHEVILLE A EXPANSION

(30) Priorität: 09.03.1999 DE 19910214
(43) Veröffentlichungstag der Anmeldung: 05.12.2001
(73) Patentinhaber: fischerwerke Artur Fischer GmbH & Co. KG, 72178 Waldachtal (DE)
(72) Erfinder: FISCHER, Rainer, D-72178 Waldachtal (DE)
(86) Internationale Anmeldenummer: EP0000373
(87) Internationale Veröffentlichungsnummer: WO00053939

(56) Entgegenhaltungen:
- EP-A- 0 445 631
- EP-A- 0 529 229
- DE-A- 3 248 141
- "Fischer-Universal-Rahmendübel FUR" BEFESTIGUNGSKATALOG 3596, BEFESTIGUNGSSYSTEME MADE BY FISCHER, Oktober 1995 (1995-10), Seiten 36-37, XP002139474 Waldachtal, DE

## Beschreibung

Die Erfindung betrifft einen Spreizdübel gemäß dem Oberbegriff des Anspruchs 1.

Derartige Spreizdübel aus Kunststoff sind an sich bekannt. Sie weisen einen sich in Längsrichtung erstreckenden und von einem Schraubkanal durchsetzten Spreizbereich auf. Durch Einbringen eines stiftförmigen Spreizkörpers, bspw. einem Nagel oder einer Schraube, wird der Spreizdübel in seinem Spreizbereich radial aufgespreizt und lässt sich auf diese Weise in einem Bohrloch eines Bauteils verankern. In der Regel wird der Schraubkanal durch eine sich zum vorderen Ende hin verjüngende Längsbohrung gebildet, so dass die stärkste Aufspreizung des Spreizdübels am vorderen Ende stattfindet. Eine solche Spreizwirkung ist in Vollbaustoffen zweckmäßig, da damit der größte Spreizdruck in der Bohrlochtiefe entsteht und damit auch bei porösen Materialien kein Ausbruch des Bohrloches im Bereich der Bohrlochmündung zu befürchten ist.

Eine solche Spreizwirkung ist jedoch für Befestigungen in Bauteilen, die ein oder mehrere Hohlräume aufweisen, wie Hohlkammerbausteine, Hohlprofile oder dgl., ungeeignet, da dadurch eine zu hohe Belastung einzelner Stege erfolgt bzw. bei ungünstiger Lage der Stege keine oder nur geringe Verankerungswerte erreicht werden.

Ausgehend von einem Spreizdübel der vorstehend beschriebenen Art liegt der Erfindung die Aufgabe zugrunde, einen solchen Spreizdübel so auszubilden, dass er universell in unterschiedlichen insbesondere Hohlräumen aufweisenden Bauteilen wie z. B. Hohlprofilen und Hohlsteinen einsetzbar ist und hohe Verankerungswerte in diesen Bauteilen aufweist.

Diese Aufgabe wird durch die im Anspruch 1 angegebenen Merkmale erreicht. Der erfindungsgemäße Spreizdübel weist einen Schraubkanal auf, der durch mehrere hintereinander angeordnete und zum vorderen Ende konisch sich verengende Abschnitte gebildet ist. Durch Eindringen der Schraube in den Schraubkanal werden die Abschnitte an den verengten Stellen aufgeweitet. Der erfindungsgemäße Spreizdübel wird somit in seinem Spreizbereich an mehreren Stellen gleichmäßig und mit einer gleichen Spreizkraft aufgespreizt. Durch die Verteilung der Spreizkraft auf die gesamte Länge des Spreizbereichs werden einerseits mehrere Stege erfasst und andererseits alle Stege gleichmäßig und unabhängig von Ihrer Lage bezüglich des Spreizdübels gleichmäßig belastet. Ferner entstehen vor und hinter den jeweiligen Stegen umlaufende, nach außen abstehende Wülste, die die Stege formschlüssig hintergreifen und somit zusätzlich eine axiale Fixierung des Spreizdübels in dem Hohlprofil bzw. Hohlbaustein bewirken. Der Spreizdübel ist dadurch form- und reibschlüssig verankert und weist in Folge dessen hohe Haltewerte auf.

Auch in einem Vollbaustoff geringer Härte kann der erfindungsgemäße Spreizdübel durch Aufspreizen im Bereich der Verengungen der Abschnitte radial in den Baustoff eindringen und dadurch zusätzlich zum Reibschluss einen Formschluss in axialer Richtung bewirken, der den Haltewert des Spreizdübel auch in einem Vollbaustoff geringer Härte verbessert. In einem harten Vollbaustoff beruht die Verankerungswirkung ausschließlich auf Reibschluss. Durch die gleichmäßige Verteilung der Spreizkraft auf die gesamte Länge des Spreizbereichs werden auch in diesen Baustoffen bei geringem Eindrehmoment der Schraube hohe Haltekräfte erzielt.

Zur Verankerung des Spreizdübels können Schlagschrauben, Schrauben mit einem Holzschraubengewinde oder einem metrischen Gewinde eingedreht werden. Bei Verwendung einer metrischen Schraube ist es zur Verminderung des Eindrehwiderstandes zweckmäßig, die konischen Verengungen der Abschnitte etwas geringer als bei Verwendung einer Schraube mit Holzschraubengewinde zu wählen.

In einer weiteren Ausgestaltung der Erfindung können die Abschnitte durch mehrere Teilabschnitte gebildet sein, die wendeltreppenförmig hintereinander angeordnet sind. Dadurch ergibt sich eine weitere Aufteilung der Spreizkraft, die zu einer wendelförmig umlaufenden Wulstbildung beim Eindrehen der Schraube führt. Unabhängig von der Lage der jeweiligen Stege ergibt sich somit eine optimale Verankerung des Spreizdübels insbesondere in Hohlprofilen mit mehreren Stegen. Bei einer Ausgestaltung der Erfindung weist der Spreizdübel in Längsrichtung verlaufende und den Spreizbereich bildende Spreizschenkel auf. Die Spreizschenkel sind bspw. durch Schlitze oder Trennebenen gebildet.

Um den Spreizdübel einstückig durch Spritzgießen herstellen zu können, weist eine Ausgestaltung der Erfindung ein Filmscharnier auf, durch das die Spreizschenkel schwenkbar miteinander verbunden sind. Der Spreizdübel wird mit aufgeklappten Spreizschenkeln gespritzt und nach dem Spritzen zusammengeklappt. Die zusammengeklappten Spreizschenkeln können durch Schweißen, Kleben, eine Clipsverbindung, eine Schwalbenschwanzverbindung oder dgl. drehfest miteinander verbunden sein. Das Filmscharnier wird durch eine dünne Kunststoffstelle gebildet, die das Verschwenken aufgrund der Verformbarkeit des Kunststoffs erlaubt.

Bei der Verwendung des Spreizdübels in Verbindung mit einer ein metrisches Gewinde aufweisenden Schraube, z.B. für die Befestigung eines Gelenkbolzens an einen Türrahmen ist es zweckmäßig, den Spreizdübel im Bereich seines hinteren Endes mit einem durch mehrere Gewindegänge gebildeten und dem metrischen Gewinde angepassten Innengewinde zu versehen. Über dieses Gewinde wird die Vorschubbewegung zum Eindrehen der Schraube in den Spreizbereich erzeugt.

Die Erfindung wird nachfolgend anhand eines in der Zeichnung dargestellten Ausführungsbeispiels nähers erläutert. Es zeigen:
- Figur 1: den erfindungsgemäßen Spreizdübel in Seitenansicht,
- Figur 2: den Spreizdübel aus Figur 1 mit aufgeklappten Spreizschenkeln
- Figur 3: den in einem Hohlprofil verankerten Spreizdübel.

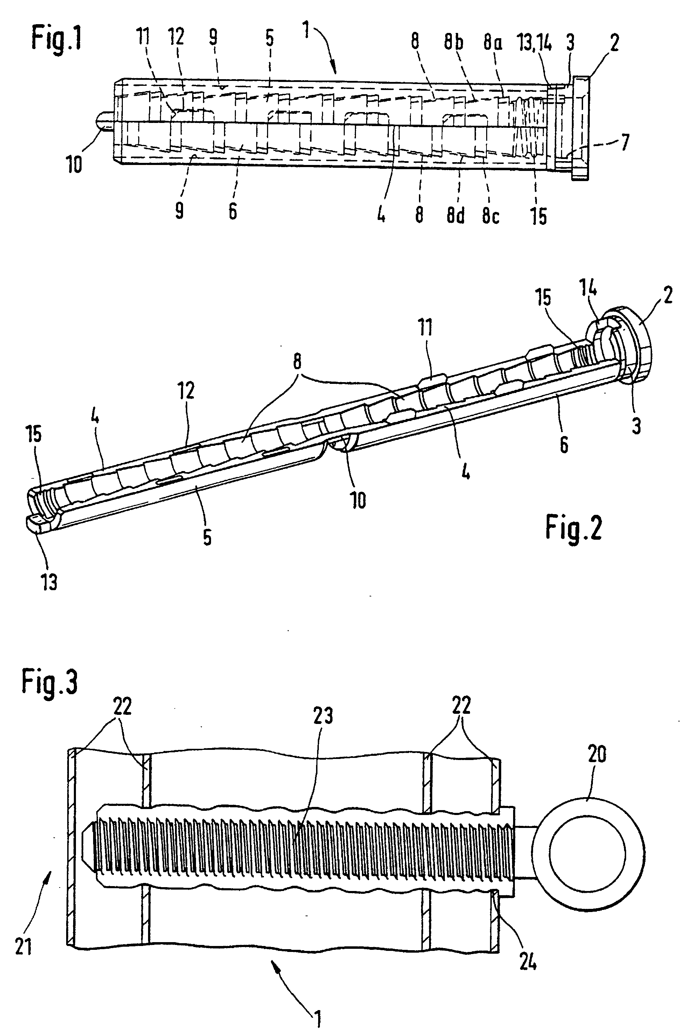

Der in Figur 1 dargestellte erfindungsgemäße Spreizdübel 1 ist ein einstückig aus Kunststoff hergestelltes Spritzgießteil. An seinem hinteren Ende ist ein radial überstehender, umlaufender Einschlagbund 2 einstückig an den Spreizdübel 1 angeformt. Vom Einschlagbund 2 erstreckt sich ein hohlzylindrischer Dübelschaft 3 über ein kurzes Stück der Länge des Spreizdübels 1 in Richtung dessen vorderen Endes. Vom Dübelschaft 3 bis zum vorderen Ende des Spreizdübels 1 ist der Spreizdübel entlang einer Axialebene 4 in zwei in Längsrichtung des Spreizdübels 1 verlaufende Spreizschenkel 5, 6 geteilt, die den Spreizbereich des Spreizdübels 1 bilden. Der Spreizdübel 1 wird über seine gesamte Länge von einem Schraubkanal 7 durchsetzt, der im Bereich des Einschlagbundes 2 und Dübelschaftes 3 im wesentlichen zylindrisch ausgebildet und dem Außendurchmesser einer in der Figur nicht dargestellten Schraube entspricht. In dem durch die Spreizschenkel 5, 6 gebildeten Spreizbereich wird der Schraubkanal 7 durch mehrere hintereinander angeordnete und zum vorderen Ende konisch sich verengende Abschnitte 8 gebildet, die in der Figur mit Strichlinien dargestellt sind. Jeder Abschnitt 8 wird im dargestellten Ausführungsbeispiel durch 4 Teilabschnitte 8a, 8b, 8c, 8d gebildet, die wendeltreppenförmig hintereinander angeordnet sind. Jeder Teilabschnitt umfasst auf den Querschnitt des Spreizdübels 1 bezogen jeweils einen Viertelkreis. Um das Eindrehen der Schraube zu erleichtern ist es zweckmäßig, die Wendelsteigung der Teilabschnitte der Gewindesteigung der Schraube anzupassen. Der größte Durchmesser der Schraube entspricht in etwa dem größten Durchmesser der Abschnitte 8. Beim Eindrehen der Schraube weitet diese den Spreizdübel 1 im Bereich der konischen Verjüngung der Abschnitte 8 auf, so dass über die gesamte Länge des Spreizbereichs eine gleichmäßige Aufweitung des Spreizdübels erfolgt. Um das Spreizverhalten des Spreizdübels 1 noch zu verbessern weist jeder Spreizschenkel 5, 6 zusätzlich eine in Längsrichtung verlaufende Spreiznut 9 auf, die die Spreizschenkel 5, 6 in Längsrichtung in zwei Hälften unterteilt. Durch die Trennebene 4 einerseits und die Spreiznuten 9 andererseits ergibt sich eine Vierfachteilung des Spreizdübels 1 in Längsrichtung. Der Nutgrund der Spreiznut 9 ist in Figur 1 mit Strichlinien angedeutet.

Um den Spreizdübel 1 spritztechnisch einstückig herstellen zu können, sind die beiden Spreizschenkel 5, 6 am vorderen Ende des Spreizdübels 1 mit einem Filmscharnier 10 schwenkbar miteinander verbunden. Das Filmscharnier 10 ist eine dünne Kunststoffstelle, die das Verschwenken der Spreizschenkel 5, 6 gegeneinander aufgrund der Verformbarkeit des Kunststoffs ermöglicht. Der Spreizdübel 1 wird mit auseinandergeklappten Spreizschenkeln 5, 6, wie in Figur 2 dargestellt, durch Spritzgießen hergestellt. Beim Spritzgießen befindet sich eine der beiden Spreizschenkel 6 in Verlängerung des anderen Spreizschenkels 5. Nach dem Spritzgießen werden die beiden Spreizschenkel 5, 6 zusammengeklappt, wie in Figur 1 dargestellt. Zur Verbindung der beiden Spreizschenkel 5, 6 miteinander weist einer der beiden Spreizschenkel 6 einstückige in Umfangsrichtung von ihm abstehende Verbindungsleisten 11 auf, die in komplementäre Ausnehmungen 12 am anderen Spreizschenkel 5 eingreifen. Zusätzlich zu dieser Verbindung wird der Spreizschenkel 5 über eine Schwalbenschwanzverbindung 13, 14 mit dem Dübelschaft 3 verbunden.

Für die Verwendung des Spreizdübels 1 in Verbindung mit einer ein metrisches Gewinde aufweisenden Schraube weist der Spreizdübel 1 im Anschluss an den Dübelschaft 3 ein durch mehrere Gewindegänge gebildetes Innengewinde 15 auf, das dem Gewinde der Schraube entspricht. Über das Innengewinde 15 wird der für das Eindrehen notwendige Vorschub der Schraube erreicht. In Figur 4 ist die Befestigung eines Gelenkbolzens 20 mit dem erfindungsgemäßen Spreizdübel 1 in einem Hohlprofil 21 mit mehreren Stegen 22 dargestellt. Mit dem an dem Gelenkbolzen 20 angeordneten Gewindeabschnitt 23 ist der im Bohrloch 24 eingeschobene Spreizdübel 1 verspreizt und in dem Hohlprofil 21 verankert. Durch das Eindrehen des Gewindeabschnitts 23 in den Spreizdübel 1 werden die Verengungen der Abschnitte 8 auf der gesamten Länge des Spreizbereichs aufgeweitet, so dass in den Bohrlöchern 24 der Stege 22 eine Verpressung des Spreizdübels und damit ein Reibschluss und vor und hinter den Stegen 22 durch Wulstbildung ein Formschluss entsteht. Der Gelenkbolzen ist somit in der Lage sowohl Querkräfte als auch Axialkräfte zu übernehmen.

## Patentansprüche

1. Spreizdübel mit einem sich in Längsrichtung erstreckenden und von einem Schraubkanal durchsetzten Spreizbereich, in den eine Schraube zur Verankerung des Spreizdübels insbesondere in Hohlräume aufweisenden Bauteilen wie Hohlprofile, Hohlkammerbausteine und dgl. einschraubbar ist, **dadurch gekennzeichnet, dass** der Schraubkanal (7) im Spreizbereich durch mehrere hintereinander angeordnete und zum vorderen Ende konisch sich verengende Abschnitte (8) gebildet ist.

2. Spreizdübel nach Anspruch 1, **dadurch gekennzeichnet, dass** die Abschnitte (8) durch mehrere Teilabschnitte (8a, 8b, 8c, 8d) gebildet sind, die wendeltreppenförmig hintereinander angeordnet sind.

3. Spreizdübel nach Anspruch 1, **dadurch gekennzeichnet, dass** der Spreizbereich in Längsrichtung des Spreizdübels (1) verlaufende Spreizschenkel (5, 6) aufweist.

4. Spreizdübel nach Anspruch 1, **dadurch gekennzeichnet, dass** die Spreizschenkel (5, 6) über ein Filmscharnier (10) schwenkbar miteinander verbunden sind.

5. Spreizdübel nach Anspruch 1, **dadurch gekennzeichnet, dass** die Spreizschenkel (5, 6) drehfest miteinander verbunden sind.

6. Spreizdübel nach Anspruch 1, **dadurch gekennzeichnet, dass** die Spreizschenkel (5, 6) eine in Längsrichtung des Spreizdübels (1) verlaufende Spreiznut (9) aufweisen.

7. Spreizdübel nach Anspruch 1, **dadurch gekennzeichnet, dass** der Spreizdübel (1) im Bereich seines hinteren Endes ein durch mehrere Gewindegänge gebildetes und dem Gewinde der Schraube (20) angepasstes Innengewinde (15) aufweist.

## Claims

1. Expansible plug having an expansible region extending in the longitudinal direction through which a screw channel passes, into which a screw can be screwed in order to anchor the expansible plug especially in void-containing building components, such as hollow sections, cavity building blocks and the like, **characterized in that** the screw channel (7) is formed in the expansible region by a plurality of portions (8) arranged in succession and tapering conically towards the leading end.

2. Expansible plug according to claim 1, **characterized in that** the portions (8) are formed by a plurality of partial portions (8a, 8b, 8c, 8d) that are arranged in succession in the manner of a spiral staircase.

3. Expansible plug according to claim 1, **characterized in that** the expansible region has expansible legs (5, 6) extending in the longitudinal direction of the expansible plug (1).

4. Expansible plug according to claim 1, **characterized in that** the expansible legs (5,6) are connected pivotably to one another by means of a film hinge (10).

5. Expansible plug according to claim 1, **characterized in that** the expansible legs (5, 6) are connected to one another secure against rotation.

6. Expansible plug according to claim 1, **characterized in that** the expansible legs (5, 6) have an expansible groove (9) extending in the longitudinal direction of the expansible plug (1).

7. Expansible plug according to claim 1, **characterized in that** the expansible plug (1) has, in the region of its rear end, an internal thread (15) formed by a plurality of thread turns that is matched with the thread of the screw (20).

## Revendications

1. Cheville à expansion avec une zone d'expansion s'étendant dans le sens longitudinal et traversée par un canal fileté dans lequel une vis peut être vissée pour ancrer la cheville à expansion, en particulier dans des éléments de construction comportant des cavités tels que des profils creux, des parpaings creux et autres éléments du même genre, **caractérisée en ce que** le canal fileté (7) est formé, dans la zone d'expansion, de plusieurs segments (8) disposés les uns derrière les autres et rétrécis en forme de cône vers leur extrémité avant.

2. Cheville à expansion selon la revendication 1, **caractérisée en ce que** les segments (8) sont formés de plusieurs segments partiels (8a, 8b, 8c, 8d) qui sont disposés les uns derrière les autres en forme d'escalier tournant.

3. Cheville à expansion selon la revendication 1, **caractérisée en ce que** la zone d'expansion comporte des branches d'expansion (5, 6) s'étendant dans le sens longitudinal de la cheville à expansion (1).

4. Cheville à expansion selon la revendication 1, **caractérisée en ce que** les branches d'expansion (5, 6) sont reliées les unes aux autres de manière à pivoter par l'intermédiaire d'une charnière à film (10).

5. Cheville à expansion selon la revendication 1, **caractérisée en ce que** les branches d'expansion (5, 6) sont reliées les unes aux autres de manière à résister à la torsion.

6. Cheville à expansion selon la revendication 1, **caractérisée en ce que** les branches d'expansion (5, 6) comportent une rainure d'expansion (9) s'étendant dans le sens longitudinal de la cheville à expansion (1).

7. Cheville à expansion selon la revendication 1, **caractérisée en ce que** la cheville à expansion (1) comporte dans la zone de son extrémité arrière un filet femelle (15) formé par plusieurs spires et adapté au filetage de la vis (20).
